# EUROPÄISCHE PATENTANMELDUNG

(11) **EP 0 548 661 A1**
(43) Veröffentlichungstag der Anmeldung: **30.06.1993**
(21) Anmeldenummer: 92120910.2
(22) Anmeldetag: 08.12.1992
(51) Int. Cl.: B65G 15/00, B65G 41/00, B65G 23/44

(54) **Bandfördereinrichtung**

(30) Priorität: 23.12.1991 DE 4142873
(71) Anmelder: Pactec Verpackungsmaschinen-Fabrik Theegarten GmbH & Co. KG, 01237 Dresden (DE)
(72) Erfinder: Schubert, Dieter, O-8028 Dresden (DE); Herzog, Jürgen, O-8028 Dresden (DE)
(74) Vertreter: Grünecker, Kinkeldey, Stockmair & Schwanhäusser Anwaltssozietät

(57) **Zusammenfassung**

Die Erfindung betrifft eine Bandfördereinrichtung, die zum einfachen Wechseln des umlaufenden Förderbandes eine Fördereinheit aufweist, welche einseitig um eine in Förderrichtung weisende Achse (x) schwenkbar in einem Maschinengestell (1) gelagert ist, so daß die Fördereinheit (2,3;4-7) zwischen einer im wesentlichen horizontalen Arbeitsposition und einer gegenüber dieser um einen bestimmten Schwenkwinkel verschwenkten Flachförderband-Montageposition, in der ein seitliches Abziehen bzw. Aufsetzen des Förderbandes möglich ist, verlagerbar ist. Eine solche Bandfördereinrichtung ist besonders zur Verwendung in der Süßwarenindustrie und in Verbindung mit einer Reihenanordnung einer Mehrzahl derartiger Bandfördereinrichtungen mit engem Abstand geeignet.

## Beschreibung

Die Erfindung betrifft eine Bandfördereinrichtung mit einem Maschinengestell und einer Fördereinheit, die eine Mehrzahl von Förderrollen aufweist, um die ein endloses Flachförderband geführt ist.

Bandfördereinrichtungen werden vorzugsweise zum Fördern von Stück- und Schüttgut verwendet und sind in verschiedenen Ausführungen bekannt. Zum Fördern und Sortieren von Süßwaren werden mehrere Bänder geringerer Abmessung hintereinander angeordnet, die mit unterschiedlicher Geschwindigkeit umlaufen. Der Abrieb von den Süßwaren führt zur Verschmutzung der Bänder, die durch Abstreifer beseitigt wird. Nach einer gewissen Laufzeit ist es jedoch erforderlich, die Bänder zur Reinigung oder auch zum Austausch herauszunehmen. Bei bekannten Einrichtungen dieser Art ist das Wechseln der Bänder verhältnismäßig umständlich und mit erheblichem Zeitaufwand verbunden. Zu diesem Zweck müssen in der Regel die Förderrollen gelöst und aus dem Wirkungsbereich des Förderbandes entfernt werden, um anschließend das Förderband herausheben zu können.

Der Erfindung liegt daher die Aufgabe zugrunde, eine Bandfördereinrichtng der eingangs genannten Art zu verbessern, derart, daß ein Wechsel des Förderbandes ohne Entfernung der Förderrollen in einfacher Weise und mit geringem Zeitaufwand sowie in bequemer Handhabung möglich ist.

Diese Aufgabe wird erfindungsgemäß dadurch gelöst, daß die Fördereinheit einseitig um eine in Förderrichtung verlaufende Achse verschwenkbar in dem Maschinengestell gelagert ist.

Weitere, bevorzugte Ausgestaltungen des Erfindungsgegenstandes sind in den Unteransprüchen dargelegt.

Vorzugsweise sind die Förderrollen der Fördereinheit in zwei einander gegenüberliegenden, starr miteinander verbundenen Seitenteilen drehbar gelagert, wobei das eine Seitenteil in Verbindung mit lateral auswärts sich erstreckenden Traversen durch im Maschinengestell festgelegte Schwenklager schwenkbar gelagert ist, während das andere Seitenteil an dem gegenüberliegenden Bereich des Maschinengestelles durch eine Feststellvorrichtung festlegbar, d.h. dort lösbar gehalten ist.

Vorzugsweise wird ein Umlenkbereich des Flachförderbandes, der sich eng benachbart zu einer gleichartig aufgebauten, weiteren Bandfördereinrichtung befindet, durch eine Förderrolle gebildet, die ihrerseits in einem Schwenkhebelpaar gelagert ist, das in Verbindung mit einer Exzenter-Feststellvorrichtung einseitig im Maschinengestell drehbar gelagert ist.

Gemäß einer weiteren, vorteilhaften Ausgestaltung des Erfindungsgegenstandes wird der verbleibende Umlenkbereich des oberen Trums des Flachförderbandes durch ein Führungsrohr gebildet, das U-förmig gestaltet ist und zugleich der Durchführung einer Kühlflüssigkeit zur Kühlung des Flachförderbandes dient. Das Führungsrohr ist wiederum eng benachbart zu einer, einen Umlenkbereich bildenden Förderrolle einer nächsten Bandfördereinrichtung angeordnet.

Die Bandfördereinrichtung ist insbesondere zur Verwendung in einer Reihenanordnung eng benachbarter Bandfördereinrichtungen in der Süßwarenindustrie vorgesehen, wobei zum Fördern und Sortieren mehrere Bandfördereinrichtungen hintereinandergeschaltet und eng benachbart zueinander angeordnet sind, wobei die einzelnen Flachförderbänder der Bandfördereinrichtungen mit unterschiedlichen Umlaufgeschwindigkeiten betrieben sind.

Die Erfindung wird nachstehend anhand eines Ausführungsbeispieles und zugehöriger Zeichnungen näher erläutert. In diesen zeigen:

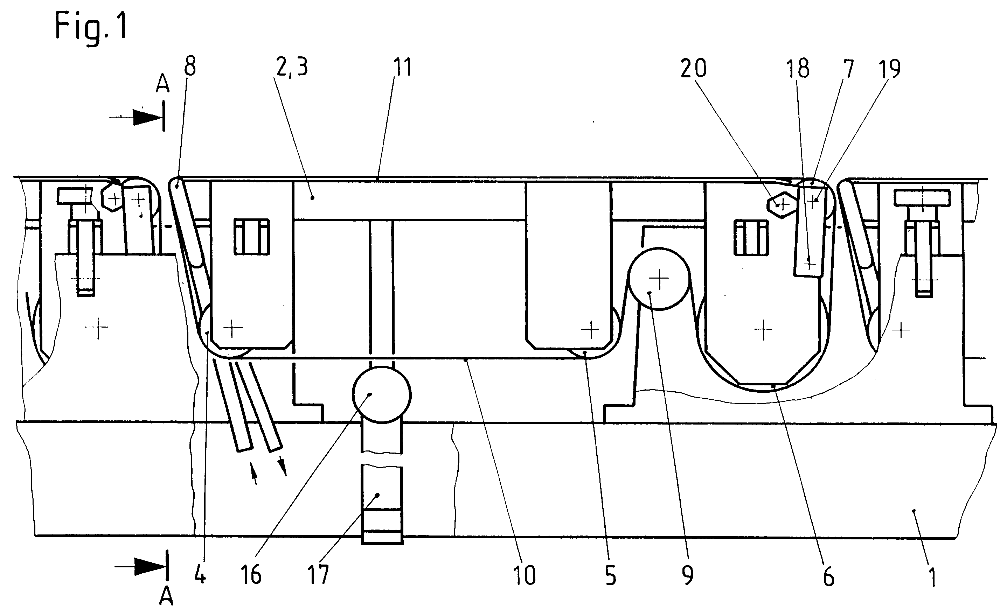

- Fig. 1: eine Vorderansicht der Bandfördereinrichtung,

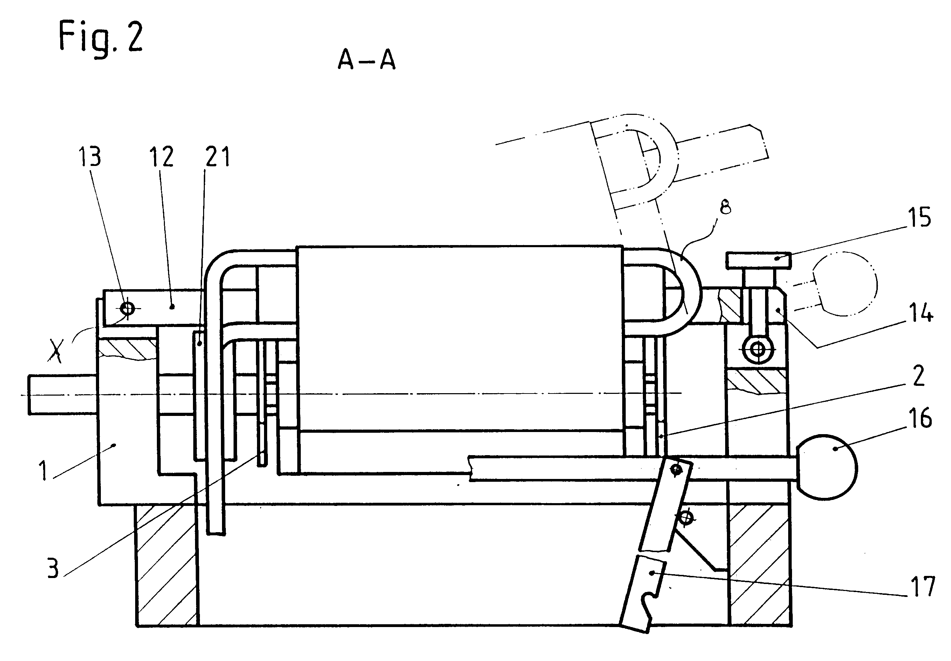

- Fig. 2: einen Schnitt nach der Linie A-A.

Im Ausführungsbeispiel ist eine Bandfördereinrichtung beschrieben, wie sie zum Auseinanderziehen eines Gutstromes von Konfekt und Ausrichten derselben in einer Reihe verwendet werden, ohne daß die Erfindung an diese spezielle Ausführung gebunden ist. In derartigen Anlagen sind mehrere Bandförderer gleicher Ausführung hintereinander in einem Maschinengestell 1 angeordnet. Jede Bandfördereinrichtung besteht aus zwei langgestreckten Seitenteilen 2 und 3, die starr miteinander verbunden sind.

Zwischen den Seitenteilen 2, 3 sind Förderrollen 4, 5, 6, 7 angeordnet, ferner ist eine als Kühlrohr ausgebildete Führungsleiste 8 vorgesehen. Die Förderrollen 4, 5, 6, 7 sind beidseitig in den Seitenteilen 2, 3 drehbar gelagert. Die Förderrolle 6 wird in bekannter Weise angetrieben. Ferner ist eine im Maschinengestell 1 verstellbar gelagerte Spannrolle 9 vorgesehen. Über die Förderrollen 4 bis 7, die Führungsleiste 8 und um die Spannrolle 9 ist ein Flachförderband 10 geführt. Zur Unterstützung des oberen Trums des Flachförderbandes 10 ist mit den Seitenteilen 2, 3 eine Bandauflage 11 verbunden. An dem Seitenteil 3 sind Traversen 12 befestigt, die in Schwenklagern 13 des Maschinengestells 1 um eine parallel zur Förderrichtung des Flachförderbandes 10 verlaufende Achse X schwenkbar gelagert sind. Das gegenüberliegende Seitenteil 2 ist mit Haltern 14 versehen, die mit im Maschinengestell 1 gelagerten Feststellern 15 zusammenwirken. An dem Seitenteil 3 ist ferner ein Betätigungsgriff 16 starr angeordnet, der unter das Förderband 10 hindurchgeführt ist. An dem Betätigungsgriff 16 ist eine Arretierung 17 zum Feststellen der Fördereinheit in der herausgeschwenkten Lage angelenkt.

Bei mehreren hintereinander angeordneten Bandförderern darf zwischen den Flachbandförderern 10 nur ein geringer Spalt vorhanden sein. Beim Ausschwenken eines Bandförderers ist ein größerer Abstand zu den benachbarten Flachförderbändern 10 jedoch vorteilhaft. Zu diesem Zweck ist an den Seitenteilen 2, 3 je ein um den Drehpunkt 18 schwenkbarer Hebel 19 angeordnet. In diesen Hebeln 19 ist die Förderrolle 7 beidseitig gelagert. Den Hebeln 19 ist ferner je ein Exzenterbolzen 20 zugeordnet, der mit mehreren Rastflächen und einer Kennzeichnung versehen ist. Die Kennzeichnung ermöglicht ein schnelles Auffinden der Betriebsstellung der Förderrolle 7.

Der Bandwechsel der erfindungsgemäßen Einrichtung geschieht wie folgt:
Die Feststeller 15 werden gelöst und aus dem Bereich der Halter 14 entfernt. Anschließend wird der Exzenterbolzen 20 verdreht, so daß die Förderrolle 7 über die federbelasteten Hebel 19, die an je einer Rastfläche der Exzenterbolzen 20 anliegen, nach innen schwenkt. Damit wird der Spalt zum jeweils benachbarten Flachförderband 10 vergrößert. Nun wird die Bandfördereinrichtung mittels Betätigungsgriff 16 aus ihrer horizontalen Arbeitslage soweit aus dem Maschinengestell 1 herausgeschwenkt, bis das Flachförderband 10 ohne seitliche Behinderung von der Führungsleiste 8 und den Förderrollen 4 bis 7 abgezogen werden kann. Dies entspricht in dem Ausführungsbeispiel etwa einem Winkel von 15°. Beim Herausschwenken wird das Förderband 10 von der Spannrolle 9 abgehoben und dadurch vollständig entspannt. Die Arretierung 17 stützt die Fördereinrichtung in ihrer obersten Stellung ab. Nunmehr kann das Förderband 10 von Hand seitlich abgenommen und ein neues oder gereinigtes Förderband 10 eingeführt werden. Nach dem Bandwechsel und Lösen der Arretierung 17 wird die Fördereinrichtung wieder in ihre Arbeitslage gebracht.

Um beim Ausschwenken der Fördereinrichtung den Antrieb der Förderrolle 6 außer Eingriff und beim Einschwenken wieder in Eingriff zu bringen, ist eine Kupplung 21 vorgesehen.

## Patentansprüche

1. Bandfördereinrichtung mit einem Maschinengestell und einer Fördereinheit, die eine Mehrzahl von Förderrollen aufweist, um die ein endloses Flachförderband geführt ist, **dadurch gekennzeichnet,** daß die Fördereinheit (2,3; 4-7) einseitig um eine in Förderrichtung verlaufende Achse (X) verschwenkbar in dem Maschinengestell (1) gelagert ist.

2. Bandfördereinrichtung nach Anspruch 1, **dadurch gekennzeichnet,** daß die Fördereinheit (2,3; 4-7) einander gegenüberliegende, starr miteinander verbundene Seitenteile (2,3) aufweist, zwischen denen die Förderrollen (4-7) angeordnet und im Bereich der Seitenteile (2,3) drehbar gelagert sind.

3. Bandfördereinrichtung nach Anspruch 2, **dadurch** **gekennzeichnet,** daß ein Seitenteil (3) in Verbindung mit lateral auswärts sich erstreckenden Traversen (12) durch maschinengestellfeste Schwenklager (13) schwenkbar in dem Maschinengestell (1) gelagert ist, während das gegenüberliegende Seitenteil (2) durch eine Feststellvorrichtung (14, 15) mit dem Maschinengestell (1) lösbar verbindbar ist.

4. Bandfördereinrichtung nach Anspruch 3, **dadurch gekennzeichnet,** daß das gegenüberliegende Seitenteil (2) lateral auswärts vorspringende Halteteile (14) aufweist, die zur Anlage gegen das Maschinengestell (1) mit verschwenkbar am Maschinengestell (1) gelagerten Feststellern (15) in Eingriff bringbar sind.

5. Bandfördereinrichtung nach Anspruch 4, **dadurch gekennzeichnet,** daß die Halteteile (14) einstückig mit den Traversen (12) ausgebildet sind.

6. Bandfördereinrichtung nach Anspruch 4 oder 5, **dadurch gekennzeichnet,** daß der Eingriff der Halteteile (14) mit den Feststellern (15) entgegen der Vorspannkraft einer Spannrolle (9) erfolgt, die im Eingriff mit einem unteren Trum des Flachförderbandes (10) ist.

7. Bandfördereinrichtung nach zumindest einem der vorhergehenden Ansprüche 1 bis 6, **dadurch gekennzeichnet,** daß eine verschwenkte Flachförderband-Montageposition gegenüber einer im wesentlichen horizontalen Arbeitsposition um einen Schwenkwinkel von ca. 15° geneigt vorgesehen ist.

8. Bandfördereinrichtung nach zumindest einem der vorhergehenden Ansprüche 1 bis 7, **dadurch gekennzeichnet,** daß die Spannrolle (9) in dem Maschinengestell (1) unabhängig von der Fördereinheit drehbar und verstellbar gelagert ist und die Spannrolle (9) in einer Arbeitsposition des Flachförderbandes (10) mit einer Unterseite des unteren Trums desselben, dieses einwärts auslenkend, in Eingriff ist und in einer verschwenkten Flachförderband-Montageposition von dem Flachförderband (10) beabstandet ist.

9. Bandfördereinrichtung nach zumindest einem der vorhergehenden Ansprüche 1 bis 8, **dadurch gekennzeichnet,** daß ein Umlenkbereich eines oberen Trums des Flachförderbandes (10) durch ein Führungsrohr (8) gebildet ist.

10. Bandfördereinrichtung nach Anspruch 9, **dadurch gekennzeichnet,** daß das Führungsrohr (8) von einer Kühlflüssigkeit durchströmt ist und insbesondere eine U-förmige Gestalt aufweist.

11. Bandfördereinrichtung nach zumindest einem der vorhergehenden Ansprüche 1 bis 10, **dadurch gekennzeichnet,** daß eine, einen Umlenkbereich des oberen Trums des Flachförderbandes (10) bildende Förderrolle (7) in durch eine Exzentervorrichtung (20) verlagerbaren, einseitig gelagerten Schwenkhebeln (19) gelagert ist.

12. Bandfördereinrichtung nach zumindest einem der vorhergehenden Ansprüche 1 bis 11, **dadurch gekennzeichnet,** daß das eine Seitenteil (3) eine unter dem Flachförderband (10) geführte, mit einem Betätigungsgriff (16) versehene Betätigungs- und Arretiervorrichtung vorgesehen ist, wobei die Arretiervorrichtung (17) an dem Betätigungsgriff (16) angelenkt ist.
